# EUROPEAN PATENT APPLICATION

(11) **EP 2 058 474 A2**
(43) Date of publication of application: **13.05.2009**
(21) Application number: 08168867.3
(22) Date of filing: 11.11.2008
(51) Int. Cl.: F01D 5/30, F01D 5/34

(54) **Turbine engine component and method for the manufacture thereof**

(30) Priority: 12.11.2007 US 938451
(71) Applicant: Honeywell International Inc., Morristown, NJ 07962 (US)
(72) Inventor: Kington, Harry L., Scottsdale, AZ 85254 (US); Howe, William J., Chandler, AZ 85226 (US)
(74) Representative: Buckley, Guy Julian

(57) **Abstract**

A method of manufacturing a turbine engine component comprises the steps of fabricating an inner hub, casting a plurality of blades, forming a blade ring, and bonding the blade ring to the inner hub. Each blade comprises a blade root and an airfoil body extending from the blade root. The blade ring comprises, at least in part, the plurality of blades coupled by a first bonding technique. The blade ring is bonded to the inner hub using a second bonding technique.

## Description

### FIELD OF THE INVENTION

The present invention relates to gas turbine engines and methods for manufacturing gas turbine engines and, more particularly, to improved gas turbine engine components and methods for manufacturing improved gas turbine engine components.

### BACKGROUND OF THE INVENTION

A gas turbine engine may be used to power various types of vehicles and systems. A particular type of gas turbine engine that may be used to power aircraft is a turbofan gas turbine engine. A turbofan gas turbine engine may include, for example, five major sections: a fan section, a compressor section, a combustor section, a turbine section, and an exhaust section.

Gas turbine engines, such as the one described above, typically operate more efficiently at increasingly higher temperatures. However, some turbine engine components, such as turbine blades and hubs, may experience greater degradation at higher temperatures. In addition, conventional blade configurations may not be ideal for the demanding performance requirements of next generation small gas generator turbine rotors.

Turbine rotors are typically individual blade castings that are machined at the root and inserted into an inner hub which has been machined to accept the blade root machined contour. However, this configuration may result in non-ideal stress concentrations between the inner hub, the blade root, and/or the turbine blades. In addition, with increasing performance requirements that may increase the temperatures surrounding the blade roots of the turbine blades, it may also be desirable to cool such blade roots.

Accordingly, it is desirable to provide a turbine engine rotor that results in improved stress distributions. It is also desirable to provide a turbine rotor that results in reduced manufacturing costs. It is also desirable to provide a turbine engine rotor that is stronger and/or that exhibits increased reliability and/or durability. It is further desirable to provide a turbine engine rotor that results in improved performance. It is also desirable to provide a turbine engine rotor that allows for the cooling of the blade roots of turbine blades in a gas turbine engine. It is also desirable to provide methods for manufacturing such turbine engine rotors. Furthermore, other desirable features and characteristics of the present invention will be apparent from the subsequent detailed description and the appended claims, taken in conjunction with the accompanying drawings and the foregoing technical field and background.

### SUMMARY OF THE INVENTION

In accordance with an exemplary embodiment of the present invention, a method of manufacturing a turbine engine rotor is provided. The method comprises the steps of fabricating an inner hub, casting a plurality of blades, forming a blade ring, and bonding the blade ring to the inner hub. Each blade comprises a blade root and an airfoil body extending from the blade root. The blade ring comprises, at least in part, the plurality of blades coupled by a first bonding technique. The blade ring is bonded to the inner hub using a second bonding technique.

In accordance with another exemplary embodiment of the present invention, a turbine engine rotor for a gas turbine engine is provided. The turbine engine rotor comprises an inner hub and a blade ring. The blade ring is bonded to the inner hub, and comprises a plurality of blades. Each blade comprises a blade root and an airfoil body extending from the blade root. The blade ring further comprises a plurality of cavities. Each cavity is disposed proximate the blade root of one of the plurality of blades.

In accordance with a further exemplary embodiment of the present invention, a gas turbine engine is provided. The gas turbine engine comprises a compressor, a combustor, and a turbine. The compressor has an inlet and an outlet, and is operable to supply compressed air. The combustor is coupled to receive at least a portion of the compressed air from the compressor, and is operable to supply combusted air. Tue turbine is coupled to receive the combusted air from the combustor and at least a portion of the compressed air from the compressor. The turbine comprises an inner hub and a blade ring. The blade ring is bonded to the inner hub, and comprises a plurality of blades. Each blade comprises a blade root and an airfoil body extending from the blade root. The blade ring further comprises a plurality of cavities. Each cavity is disposed proximate the blade root of one of the plurality of blades.

Other independent features and advantages of the preferred apparatus and methods will become apparent from the following detailed description, taken in conjunction with the accompanying drawings which illustrate, by way of example, the principles of the invention.

### BRIEF DESCRIPTION OF THE DRAWINGS

FIG. 1 is a simplified cross sectional side view of an annular multi-spool turbofan gas turbine jet engine in accordance with an exemplary embodiment of the present invention;

FIG. 2 is a simplified cross sectional view of a turbine rotor component that may be used in the engine of FIG. 1 in accordance with an exemplary embodiment of the present invention;

FIG. 3 is a simplified cross sectional view of a turbine rotor component that may be used in the engine of FIG. 1 in accordance with another exemplary embodiment of the present invention;

FIG. 4 is a flowchart of a process that may be used to manufacture a turbine rotor component, such as the turbine rotor components of FIGs. 2 or 3, in accordance with an exemplary embodiment of the present invention;

FIG. 5 is a cross sectional view of a portion of the turbine rotor component of FIGS. 2 or 3, featuring a close-up view of a plurality of blades, a portion of a blade ring and an inner hub, first and second bonding regions, and a plurality of seals as manufactured in the process of FIG. 4 in accordance with an exemplary embodiment of the present invention;

FIG. 6 is a cross sectional view of a portion of the turbine rotor component 200 from FIGS. 2 or 3, providing a close-up view of a turbine blade, along with a portion of a blade ring, first and second bonding regions, and also showing a plurality of seals, in accordance with an exemplary embodiment of the present invention;

FIG. 7 is a cross sectional view of a cover plate that can be used in connection with the turbine rotor component of FIGS. 2 or 3, in accordance with an exemplary embodiment of the present invention; and

FIG. 8 is a cross sectional top view of two turbine blades that may be used in the turbine rotor components of FIGS. 2 or 3 as manufactured in the process of FIG. 4 in accordance with an exemplary embodiment of the present invention.

### DETAILED DESCRIPTION OF A PREFERRED EMBODIMENT

Before proceeding with the detailed description, it is to be appreciated that the described embodiment is not limited to use in conjunction with a particular type of turbine engine. Thus, although the present embodiment is, for convenience of explanation, depicted and described as being implemented in a multi-spool turbofan gas turbine jet engine, it will be appreciated that it can be implemented in various other types of turbines, and in various other systems and environments. For example, various embodiments can be implemented in connection with turbines used in auxiliary power units, among any one of a number of other different implementations.

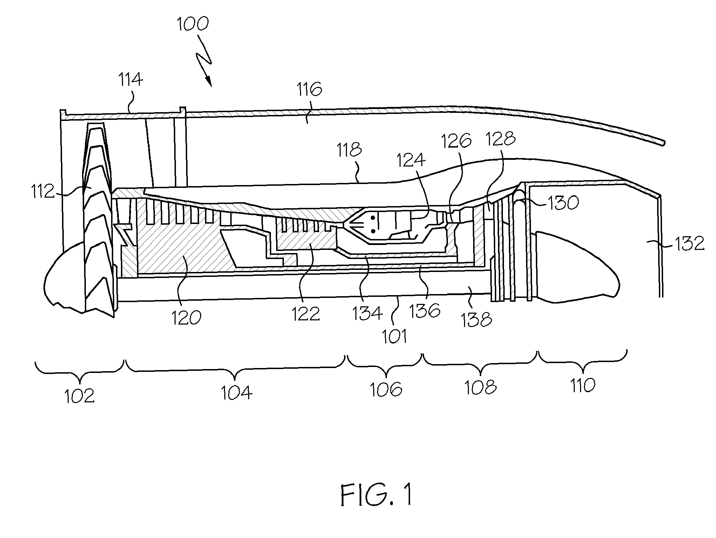

An exemplary embodiment of an upper portion of an annular multi-spool turbofan gas turbine jet engine 100 is depicted in FIG. 1. As shown in FIG. 1, the engine 100 is annular around an axis 101. The engine 100 includes an intake section 102, a compressor section 104, a combustion section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 disposed between the fan case 114 and an engine cowl 118, and provides a forward thrust. The remaining fraction of air exhausted from the fan 112 is directed into the compressor section 104.

The compressor section 104 includes two compressors, an intermediate pressure compressor 120, and a high pressure compressor 122. The intermediate pressure compressor 120 raises the pressure of the air directed into it from the fan 112 and directs the compressed air into the high pressure compressor 122. The high pressure compressor 122 compresses the air still further, and directs a majority of the high pressure air into the combustion section 106. In addition, a fraction of the compressed air bypasses the combustion section 106 and is used to cool, among other components, turbine blades in the turbine section 108. In the combustion section 106, which includes an annular combustor 124, the high pressure air is mixed with fuel and combusted. The high-temperature combusted air is then directed into the turbine section 108.

The turbine section 108 includes three turbines disposed in axial flow series, a high pressure turbine 126, an intermediate pressure turbine 128, and a low pressure turbine 130. However, it will be appreciated that the number of turbines, and/or the configurations thereof, may vary, as may the number and/or configurations of various other components of the exemplary engine 100. The high-temperature combusted air from the combustion section 106 expands through each turbine, causing it to rotate. The air is then exhausted through a propulsion nozzle 132 disposed in the exhaust section 110, providing additional forward thrust. As the turbines rotate, each drives equipment in the engine 100 via concentrically disposed shafts or spools. Specifically, the high pressure turbine 126 drives the high pressure compressor 122 via a high pressure shaft 134, the intermediate pressure turbine 128 drives the intermediate pressure compressor 120 via an intermediate pressure shaft 136, and the low pressure turbine 130 drives the fan 112 via a low pressure shaft 138.

Each of the turbines 126-130 in the turbine section 108 includes a plurality of stators (not shown in FIG. 1) and turbine blades (not shown in FIG. 1). The stators are used to direct a portion of the combusted air from the combustion section 106 onto the rotary blades. The rotary blades in turn cause the associated turbines 126-130 to rotate.

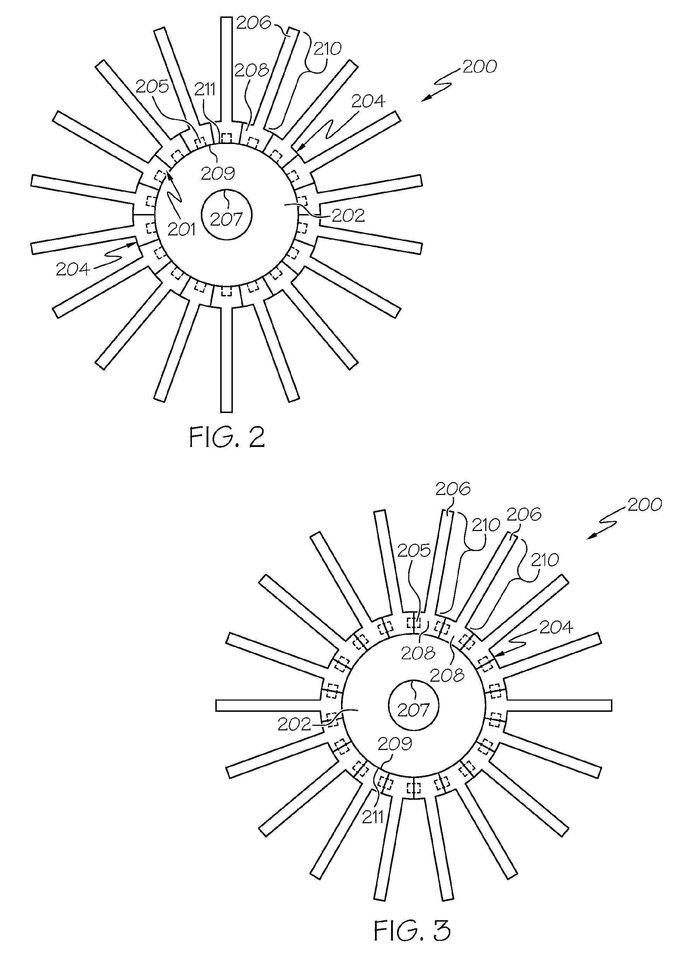

FIG. 2 provides a simplified cross sectional view, looking along the centerline, of a first exemplary embodiment of a turbine rotor component 200 that can be used in any one of a number of different types of turbines, including, among others, high, intermediate, and low pressure turbines 126, 128, and 130 of the turbine section 108 of the engine 100 of FIG. 1. The turbine rotor component 200 can also be used in connection with any number of other different types of engines, devices, and systems. As shown in FIG. 2, the turbine rotor component 200 includes an inner hub 202, a blade ring 204, a plurality of turbine blades 206 coupled to and extending from the blade ring 204, and a plurality of cavities 205 formed in the blade ring 204. The inner hub 202 includes an inner diameter 207 and an outer diameter 209. The inner hub inner diameter 207 is preferably at least substantially circular. The inner hub outer diameter 209 preferably is also at least substantially circular, and is machined to fit against the blade ring 204. The inner hub 202 is made of a relatively strong material such as a powdered metal alloy. For example, in one exemplary embodiment, the inner hub 202 is made of a nickel-based super alloy. However, it will be appreciated that in various embodiments the inner hub 202 may be made of one or more other materials.

The blade ring 204 is bonded to the inner hub 202, and includes a rung member 201 having an inner diameter surface 211 and a plurality of turbine blades 206 connected to the rung member 201. The inner diameter surface 211 is machined so that the rung member 201 fits against the inner hub outer diameter 209 and can be bonded thereto, thereby bonding the blade ring 204 to the inner hub 202. In one exemplary embodiment the blade ring 204 is bonded to the inner hub 202 via HIP (hot isostatic pressing) diffusion bonding between the inner diameter surface 211 and the inner hub 202. However, this may vary, for example in that various other types of bonds may be used.

Accordingly, after the plurality of turbine blades 206 are first bonded circumferentially together into the blade ring 204, the blade ring 204 is then bonded to the inner hub 202. The bond between the blade ring 204 and the inner hub 202 is a permanent bond capable of withstanding a relatively high amount of stress. The type of bonding used in any particular embodiment may depend on various factors, such as the amount of strength required for the bond, performance requirements, and/or various other considerations such as the cost and availability of various bonding materials. These factors may be weighted differently in accordance with various particular embodiments.

The rung member 201 is made of a material with a high tolerance for heat. For example, in one exemplary embodiment, the rung member 201 is made at least in part of directionally-controlled cast nickel material. However, it will be appreciated that in other embodiments the rung member 201 may be made of one or more other materials, such as a single crystal alloy, or another type of alloy. In a preferred embodiment, the rung member 201 comprises an inner root part of the turbine blades 206, such as the blade root described below, and is part of the same casting as the other portions of the turbine blades 206.

As shown in FIG. 2, each of the turbine blades 206 includes a blade root 208 and an airfoil body 210. The airfoil body 210 of each turbine blade 206 extends from the blade root 208 and away from the inner hub 202. In a preferred embodiment, the blade root 208 and the airfoil body 210 form a single, integral, and continuous piece. However, in certain other embodiments, the blade roots 208 may be joined to the rung member 201, and/or may be joined together to form the rung member 201. In certain embodiments, each blade root 208 is joined to the rung member 201 using another bonding material used in any one of a number of different joining techniques, such as vacuum brazing, diffusion bonding, transient liquid phase bonding, or welding. However, in a preferred embodiment, the blade root 208 is a continuous piece, rather than being joined to the rung member 201.

The type of bonding used in any particular embodiment may depend on various factors, such as the amount of strength required for the bond, performance requirements, and/or various other considerations such as cost and the availability of various bonding materials. These factors may be weighted differently in accordance with various particular embodiments. In certain embodiments a bonding material and/or technique used to join the blade roots 208 8 to the rung member 201 may be the same type of bonding material and/or technique used to bond the rung member 201, and thereby the blade ring 204, to the inner hub 202. In other embodiments, the respective bonding materials and/or techniques may differ.

The turbine blades 206 are individually cast of a suitable material, such as a nickel super alloy, although the material may vary in different embodiments. The turbine blades 206 preferably each have either a single crystal composition, a directionally solidified composition, or another composition that is resistant to the high temperatures typically encountered in gas turbine engine environments. However, the turbine blades 206 can be made of different materials, and/or may have a different composition.

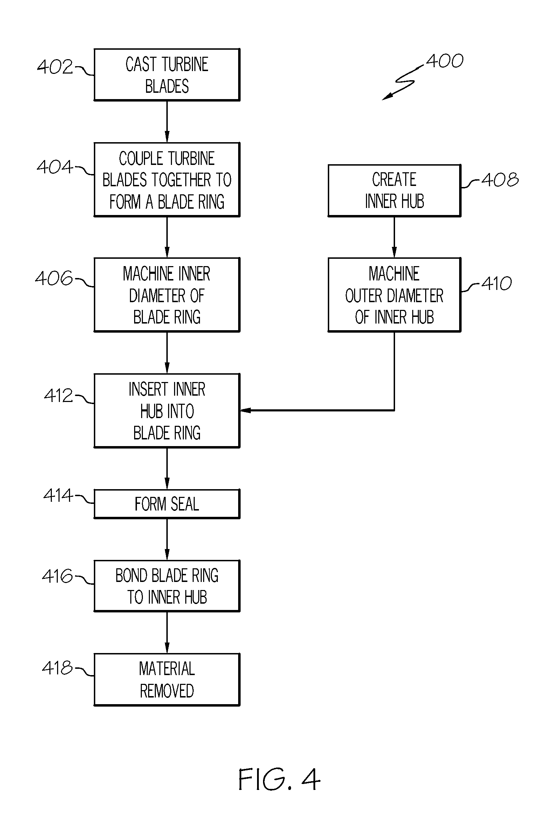

The cavities 205 are formed in the blade ring 204, and are disposed proximate locations at which the turbine blades 206 are joined to the rung member 201 or to one another to form the blade ring 204. The cavities 205 thus preferably are disposed proximate or within the blade roots 208 of the various turbine blades 206. However, in other embodiments, the cavities 205 may be formed elsewhere in the blade ring 204, depending on where the turbine blades 206 are joined thereto. These cavities are formed within the blade roots as part of the blade casting. They may connect to feed cooling air into the cooling passages within the airfoil. As will be described further below in connection with FIG. 4, in this exemplary embodiment the cavities 205 may be further enlarged by removing material in the blade root-hub bond interface area. Also, in a preferred embodiment, the cavities are part of the blade casting. After bonding, additional material may be machined so that a lower radius of the cavity, where stresses are likely to concentrate, comprises the stronger rotor hub material.

The cavities 205 help to reduce centrifugal load on the rotor. In certain embodiments, the cavities 205 also facilitate cooling of the turbine blades 206. For example, the cavities 205 can facilitate the implementation of any number of different cooling configurations for the airfoil bodies 210 of the turbine blades 206. The cavities 205 may also serve to facilitate cooling of the blade roots 208.

FIG. 3 provides a simplified cross sectional view of a second exemplary embodiment of a turbine rotor component 200 that can be used in any one of a number of different types of turbines, including, among others, high, intermediate, and low pressure turbines 126, 128, and 130 of the turbine section 108 of the engine 100 of FIG. 1. Similar to the first embodiment described above in connection with FIG. 2, this second exemplary embodiment of the turbine rotor component 200 can also be used in connection with any number of other different types of engines, devices, and systems. As shown in FIG. 3, this second exemplary embodiment of the turbine rotor component 200 also includes an inner hub 202, a blade ring 204, a plurality of turbine blades 206 coupled to and extending from the blade ring 204, and a plurality of cavities 205 formed in the blade ring 204.

In the embodiment of FIG. 3, the blade roots 208 are coupled together directly to form the blade ring 204, rather than being coupled to a rung member 201. Specifically, each blade root 208 is joined to an adjacent blade root 208 to thereby form the blade ring 204. The blade roots 208 are joined in this manner using a bonding method used in any one of a number of different joining techniques, such as vacuum brazing, diffusion bonding, transient liquid phase bonding, or welding. The bonding method used to join the blade roots 208 together to form the blade ring 204 may be the same as or different from the type of bonding used to bond the blade ring 204 to the inner hub 202. The bonding method of joining the individual blades into a ring may be temporary, allowing the machining of the inner radius to the disk outer radius. Once the blade ring to disk bond is made, the blade hub to blade hub bond at the flowpath surface is not required. As will be described further below in connection with FIG. 4, in this exemplary embodiment the cavities 205 are formed as part of the blade casting or by machining the casting prior to bonding. Also in this embodiment, the inner diameter surface 211 represents an inner surface of the blade ring 204 as formed by the adjacent blade roots 208 being joined together. This embodiment of the turbine rotor component 200 of FIG. 3 is otherwise similar or identical to the embodiment of FIG. 2 described above.

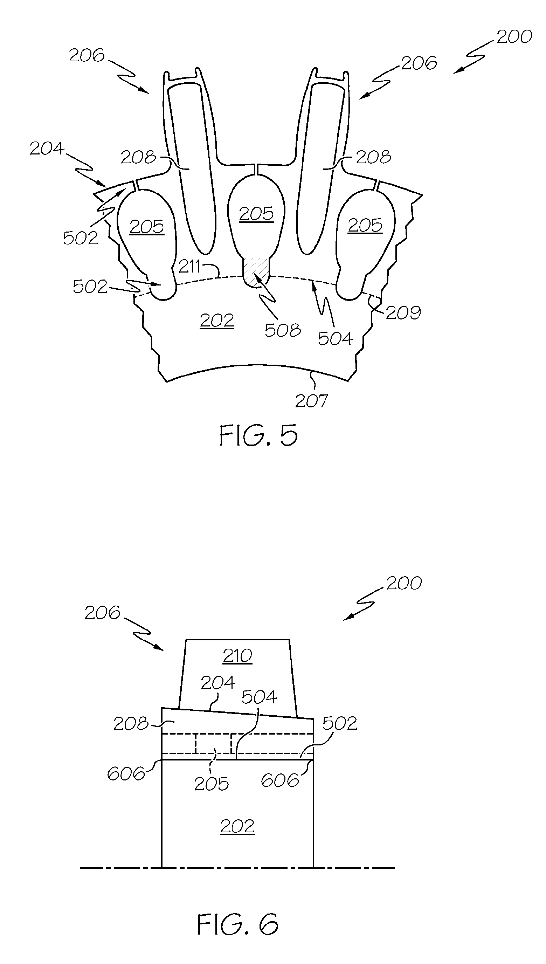

Turning now to FIG. 4, a flowchart is provided for a process 400 for manufacturing the turbine rotor component 200 depicted in FIGS. 2 and 3. The process 400 will be described below also in connection with FIGS. 5-8, which depict portions of various embodiments of the turbine rotor component 200 as manufactured in accordance with the process 400.

As shown in FIG. 4, the process 400 begins with the casting of turbine blades 206 (step 402). Each turbine blade 206 is cast to have a blade root 208 and an airfoil body 210. Preferably, the turbine blades 206 are cast as single crystal blades. By individually casting the turbine blades 206, the process 400 allows for an increase in yield for the manufacture of the turbine blades 206 and/or for a decrease in manufacturing costs, for example compared with turbine blades formed integral with a blade ring during casting. This technique also facilitates casting the turbine blades 206 with a single crystal composition to thereby provide greater resistance against high temperature levels.

In addition, in one preferred embodiment, a plurality of cavities 205 are formed in the blade ring 204 as part of the casting of the turbine blades 206 in step 402, as mentioned above. The cavities 205 reduce load on the inner hub 202, and provide a place where coolant air can be introduced to keep the blade ring 204 and the blade roots 208 cool. Also, the turbine blades 206 may be formed with other customized geometric shapes, holes, and/or passages to provide for cooling air and/or stress relief. Such customization of the turbine blades 206 can be incorporated more easily, quickly, and cost effectively when the turbine blades 206 are cast individually, as in step 402.

Alternatively, in another preferred embodiment, such a plurality of cavities 205 are formed in the blade ring 204 by machining the turbine blades 206. Such machining of the turbine blades 206 to form the cavities 205 may occur simultaneously with, or prior to, step 404 described below.

After casting of the turbine blades 206, the turbine blades 206 are coupled together to form the blade ring 204 using a first bonding technique (step 404). In one exemplary embodiment, each blade root 208 is joined to a rung member 201, thereby forming the blade ring 204 as shown in FIG. 2. Alternatively, in a preferred embodiment, the turbine blades 206 are joined together at or near the blade roots 208 using a first bonding material and a first bonding technique, thereby forming the blade ring 204 as shown in FIG. 3. The turbine blades 206 are thereby joined together and/or to the rung member 201 via any one of a number of different types of joining techniques, such as vacuum brazing, diffusion bonding, transient liquid phase bonding, or welding. The bonding of the turbine blades 206 together in step 404 may include a temporary or in-process bond, so that at least a portion of the first bonding material may be subsequently removed to break up the full ring at the rotor rim. Regardless of the type of bond formed in step 404, the inner diameter surface 211 of the resulting blade ring 204 or rung member 201 thereof is then machined (step 406) so that the inner diameter surface 211 can be easily inserted against the inner hub outer diameter 211 as described below. Material may be machined away at the cavity inner radii to bring the cavity inner radii into the disk hub material region.

Before, during, or after casting of the turbine blades 206 and/or bonding of the turbine blades 206, the inner hub 202 is created, preferably by forging or powdered metal HIPPing (step 408). The inner hub 202 is preferably formed of a high strength nickel based super metal alloy material, such as, for example, Astroloy or Alloy 10. However, it will be appreciated that the inner hub 202 may be made of one or more other materials. The outer diameter 209 of the inner hub 202 then can be machined to match the inner diameter surface 211 of the blade ring 204 (step 410). After any machining of the inner hub 202, the blade ring 204 and the inner hub 202 are aligned, and the inner hub outer diameter 209 is inserted into the blade ring inner diameter surface 211 (step 412).

The method continues in accordance with an exemplary embodiment of the present invention with the formation of one or more seals (step 414). As described in greater detail further below in connection with FIGS. 5 and 6, two seals are preferably formed at or near opposite ends of one or more regions in which the blade ring 204 is bonded to the inner hub 202. The seals help to strengthen the bonding between the blade ring 204 and the inner hub 202. In a preferred embodiment the seals are generated by vacuum brazing opposite ends of at least one bonding region between the blade ring 204 and the inner hub 202. However, other sealing techniques may be used in other embodiments.

The blade ring 204 then is bonded to the inner hub 202 using a second bonding technique (step 416). Specifically, the inner hub outer diameter 209 is bonded to the blade ring or rung member inner diameter surface 211 using the second bonding technique. In one preferred embodiment the blade ring 204 is bonded to the inner hub 202 via HIP diffusion bonding. However, in other embodiments various other types of bonding methods, such as welding, may be used.

Preferably the bond formed between the blade ring 204 and the inner hub 202 is a permanent bond that is at least as strong as the weaker of the blade ring material or hub material. In certain embodiments, the previous bonding between the adjacent blade roots 208 is a temporary or in-process bond that holds the blade ring 204 together until the permanent bonding between the blade ring 204 and the inner hub 202 is accomplished during steps 412 and 414.

In addition, preferably a plurality of cavities 205 are formed in the blade ring 204. For example, in one preferred embodiment, the cavities 205 are formed as part of the casting of the turbine blades 206 in step 402, as mentioned above. In another preferred embodiment, the individual turbine blades 206 may be machined in or before step 404 prior to bonding the turbine blades 206 together to form the blade ring 204, also as mentioned above. The cavities 205 reduce load on the inner hub 202, and provide a place where coolant air can be introduced to keep the blade ring 204 and the blade roots 208 cool.

A portion of the first bonding material then is removed from one or more bonding regions where the turbine blades 206 are coupled together to form the blade ring 204 (step 418). The first bonding material may be removed via drilling, electrochemical machining, high speed machining processes, or via various other removal techniques. In any particular embodiment, the choice between such removal techniques may depend at least in part on the types of materials used in the turbine rotor component 200, precision, time and/or cost requirements, and/or the availability of required materials and equipment. In one preferred embodiment, local areas may next be machined in step 418 to reduce local areas of stress concentration and to make the stress concentration that occurs at the bottom of the cavity 205 be placed in the inner hub 202 material region because this inner hub 202 rotor hub material will be a stronger material than the turbine blade 206 castings, for example because the cooler inner hub 202 permits the use of materials with higher strength, although lower temperature capability than the higher temperature requirements of the blade ring region.

FIG. 5 is a cross sectional view of an exemplary embodiment of a portion of the exemplary turbine rotor component 200 from FIG. 2, shown during manufacturing in accordance with the process 400 of FIG. 4. Specifically, FIG. 5 includes a close-up view of an exemplary embodiment of several turbine blades 206, a portion of the blade ring 204 and the inner hub 202, first and second bonding regions 502, 504, and seals 606 in accordance with the embodiment of FIG. 2 described above.

In the embodiment of FIG. 5, the first bonding regions 502 are the regions where each blade root 208 is bonded together to form the blade ring 204 using the first bonding material and/or the first bonding technique, as described above in connection with an exemplary embodiment of step 404 of FIG. 4. In the embodiment of FIG. 5, the first bonding regions 502 are the regions where each blade root 208 is bonded to an adjacent blade root 208 using the first bonding material and/or the first bonding technique, as described above in connection with an exemplary embodiment of step 404 of FIG. 4. The first bonding regions 502 may represent a temporary or in-process bond.

As shown in FIG. 5, a cavity 205 is present beside each of the turbine blades 206. In a preferred embodiment, the cavities 205 are formed prior to bonding. Also as shown in FIG. 5, a region 508 is preferably removed at the bottom of each cavity 205. In a preferred embodiment, this region 508 is preferably removed by machining after the blade ring 204 is bonded to the inner hub 202. As discussed above, the cavities 205 help to reduce stress on the turbine rotor component 200 by reducing net radial pull load induced by the rotation of the disk and by reducing rim to bore thermal gradients via a cooler rim. In addition, in certain embodiments, the cavities 205 also facilitate cooling of the turbine blades 206.

The second bonding regions 504 are the regions where the blade ring 204 is bonded to the inner hub 202 using a second bonding material and/or a second bonding technique, for example as described above in connection with step 416 of FIG. 4. The second bonding regions 504 represent one or more permanent bonds, such as one or more HIP diffusion bonds. In a preferred embodiment, a single, continuous bond is utilized.

FIG. 6 provides a cross sectional view of an exemplary embodiment of a portion of the turbine rotor component 200 from FIG. 2. Specifically, FIG. 6 provides a close-up view of a turbine blade 206 of an exemplary embodiment of the turbine rotor component 200 from FIG. 2, along with a portion of the blade ring 204 and the first and second bonding regions 502, 504, and also showing a plurality of seals 606. As shown in FIG. 6, the seals 606 are preferably disposed near one or more ends of each of the second bonding regions 504 and help to facilitate the bonding between the blade ring 204 and the inner hub 202. In the depicted embodiment, there are two seals 606 disposed at opposite ends of each second bonding region 504. In other embodiments, there may be one seal 606 or three or more seals 606 for each second bonding region 504. In a preferred embodiment, the seals 606 are generated by vacuum brazing a portion of each second bonding region 504 between the blade ring 204 and the inner hub 202. However, other types of seals 606 may be used in other embodiments

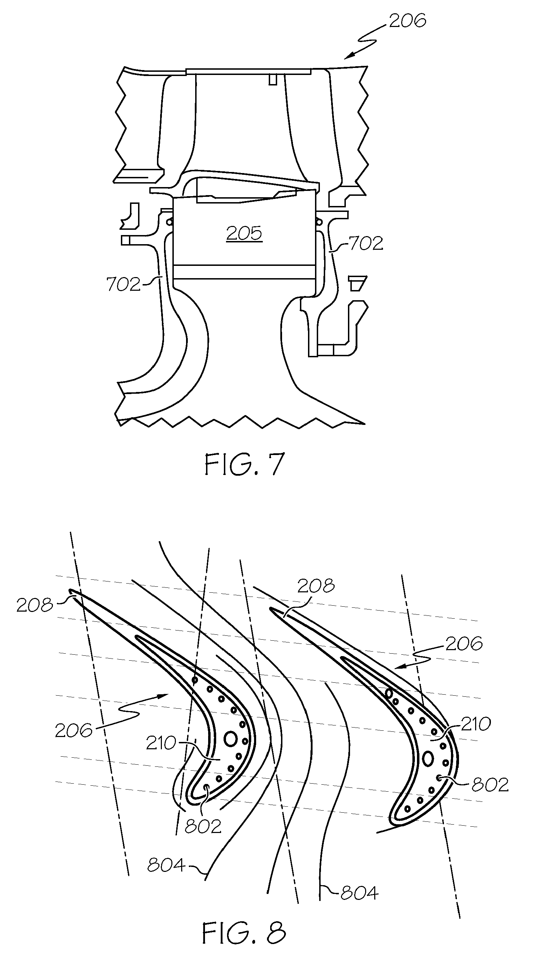

Turning now to FIG. 7, in certain embodiments cover plates 702 may also be included to help direct air flow through and around the cavities 205. Some or all of the cavities 205 may be at least partially surrounded by cover plates 702 to direct air flow through and around the cavities 205. For example, cover plates 702 may be disposed proximate one or more cavities 205. Such cover plates 702 may include cooling holes or other features to direct air flow, such as the flow of cooling air into and/or around the blade roots 208 and the airfoil bodies 210 of the various turbine blades 206. For example, in certain embodiments, the cavities 205 alongside the individual turbine blades 206 extend all along the axial length of the turbine blade 206. In one such embodiment, the cavities 205 are be open to the front of the turbine blade 206, where cooling air is allowed to enter, but are closed at the back, to assist the cover plate 702 in sealing leakage from the coolant air delivered to the cavity 205.

In yet another exemplary embodiment as shown in FIG. 8, in step 418, and/or in various other steps of the process 400 (e.g. the casting of the turbine blades 206 in step 402), the turbine blades 206 may include various cooling holes 802 embedded in both the airfoil bodies 210 and the blade roots 208, as well as cooling passages 804 between the airfoil bodies 210. In a preferred embodiment, the cooling passages 804 may be the same as, or similar to, the above-referenced cavities 205. Also as shown in FIG. 8, the blade roots 208 and the airfoil bodies 210 of the turbine blades 206 may be customized with geometric configurations that optimize cooling air flow and/or that optimize other desired performance characteristics of the turbine rotor component 200.

Accordingly, there has been provided a turbine rotor component 200 that is well suited for higher temperatures typically encountered in gas turbine engine environments. The turbine rotor component 200 provides reduced stress in the rotor rim region. Additionally, the turbine rotor component 200 also facilitates the implementation of sophisticated cooling configurations for the turbine blades 206, for example to cool the airfoil bodies 210 as well as the blade roots 208. The turbine rotor component 200 thereby potentially provides improved performance, durability, flexibility, and reliability. A process 400 for manufacturing a turbine rotor component has also been provided. The process 400 potentially provides a higher manufacturing yield and a lower manufacturing cost, for example when compared with conventional turbine blades. As mentioned above, it will be appreciated that the turbine rotor component 200 and the process 400 can be used in connection with any number of different types of engines, devices, and systems.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (400) of manufacturing a turbine engine component (200), the method (400) comprising the steps of:
fabricating an inner hub (202);
casting a plurality of blades (206), each blade (206) comprising:
a blade root (208); and
an airfoil body (210) extending from the blade root (208);
forming a blade ring (204) comprising, at least in part, the plurality of blades (206) coupled using a first bonding technique; and
bonding the blade ring (204) to the inner hub (202) using a second bonding technique.

2. The method (400) of Claim 1, wherein the step of forming a blade ring (204) comprises bonding the blade roots (208) together using the first bonding technique.

3. The method (400) of Claim 1, wherein the step of forming a blade ring (204) comprises bonding the blade roots (208) to a rung member (201) using the first bonding technique.

4. The method (400) of Claim 1, further comprising the steps of:
removing material from the blade ring (204) or the inner hub (202), or both; and
forming a cavity (205) in the blade root (208).

5. A turbine engine component (200) for a gas turbine engine, the turbine engine component (200) comprising:
an inner hub (202); and
a blade ring (204) bonded to the inner hub (202), the blade ring (204) comprising a plurality of blades (206), each blade (206) comprising:
a blade root (208); and
an airfoil body (210) extending from the blade root (208);
wherein the blade ring (204) further comprises a plurality of cavities (205), each cavity (205) disposed proximate the blade root (208) of one of the plurality of blades (206).

6. The turbine engine component (200) of Claim 5, wherein the blade ring (204) further comprises:
a rung member (201) bonded to the inner hub (202).

7. The turbine engine component (200) of Claim 5, further comprising:
a cover plate (702) at least partially surrounding at least one of the plurality of cavities (205).

8. A gas turbine engine (100), comprising:
a compressor (104, 120, 122) having an inlet and an outlet and operable to supply compressed air;
a combustor (106) coupled to receive at least a portion of the compressed air from the compressor (104, 120, 122) and operable to supply combusted air; and
a turbine (108, 126, 128, 130) coupled to receive the combusted air from the combustor (106) and at least a portion of the compressed air from the compressor (104, 120, 122), the turbine (108, 126, 128, 130) comprising:
an inner hub (202); and
a blade ring (204) bonded to the inner hub (202), the blade ring (204) comprising a plurality of blades (206), each blade (206) comprising:
a blade root (208); and
an airfoil body (210) extending from the blade root (208);
wherein the blade ring (204) further comprises a plurality of cavities (205), each cavity (205) disposed proximate the blade root (208) of one of the plurality of blades (206).

9. The gas turbine engine (100) of Claim 8, wherein the blade ring (204) further comprises:
a rung member (201) bonded to the inner hub (202).

10. The gas turbine engine (100) of Claim 8, further comprising:
a cover plate (702) at least partially surrounding one of the plurality of cavities (205).
